# EUROPÄISCHE PATENTSCHRIFT

(11) **EP 3 439 847 B1**
(45) Veröffentlichungstag und Bekanntmachung des Hinweises auf die Patenterteilung: **29.01.2020**
(21) Anmeldenummer: 17723234.5
(22) Anmeldetag: 05.04.2017
(51) Int. Cl.: B29C 48/515, B29C 48/84, B29C 48/25, B29C 48/505, B29C 48/85

(54) **INNENTEMPERIERBARE SCHNECKE, ANLAGE SOWIE VERFAHREN UNTER VERWENDUNG EINER DERARTIGEN SCHNECKE**
INTERNALLY TEMPERATURE-CONTROLLABLE SCREW, INSTALLATION AND METHOD USING SUCH A SCREW
VIS SANS FIN À THERMORÉGULATION INTERNE, INSTALLATION ET PROCÉDÉ DE MISE EN OEUVRE D'UNE TELLE VIS SANS FIN

(30) Priorität: 06.04.2016 AT 502802016
(43) Veröffentlichungstag der Anmeldung: 13.02.2019
(73) Patentinhaber: Next Generation Elements GmbH, 4101 Feldkirchen an der Donau (AT)
(72) Erfinder: BARTH, Gerold, 4073 Wilhering (AT); HOCHREITER, Josef, 4240 Freistadt (AT); PICHLER, Thomas, 4171 St. Peter am Wimberg (AT)
(74) Vertreter: Burger, Hannes
(86) Internationale Anmeldenummer: PCT/AT2017/060086
(87) Internationale Veröffentlichungsnummer: WO 2017/173473

(56) Entgegenhaltungen:
- WO-A1-2012/126574
- JP-A- 2010 105 333
- SU-A1- 863 383
- US-A- 790 466

## Beschreibung

Die Erfindung betrifft eine innentemperierbare Schnecke, eine damit ausgestattete Anlage sowie ein Verfahren zum Betreiben einer derartigen Anlage.

Die SU 863 383 A1 beschreibt einen Schneckenmischer für Polymermaterial mit einem innentemperierbaren Schneckenkörper für die thermische Behandlung des Polymermaterials. Der Schneckenkörper umfasst ein um eine Längsachse drehbar angeordnetes Tragelement, an welchem helixförmig ausgebildete Schneckenstege angeordnet sind. Die Schneckenstege sind durch eigenständige Hohlprofilkörper gebildet, wobei der in seinem Querschnitt rund ausgebildet Hohlprofilkörper an seiner Außenseite mit einem Schweißauftrag versehen ist. Damit wird ein Schneckensteg mit einem äußeren rechteckigen Querschnitt gebildet, wobei der Hohlprofilkörper von dem aufgetragenen Schweißmaterial außerhalb seines Anlagebereichs am Tragelement umgeben ist. Weiters ist der Hohlprofilkörper direkt am Tragelement des Schneckenkörpers in einer im Tragelement befindlichen Vertiefung angeordnet. Der Hohlprofilkörper bildet innerhalb des Schneckenstegs den ebenfalls helixförmig verlaufenden Durchströmkanal zum Durchleiten eines Temperiermediums. Der Durchströmkanal steht einerseits mit einem Zufuhrkanal und andererseits mit einem Abfuhrkanal in Strömungsverbindung.

Die US 790,466 A beschreibt eine Mischvorrichtung zur Butterherstellung mit einem Aufnahmebehälter sowie einer im Aufnahmebehälter drehbar angeordneten Schnecke. Die Schnecke weist einen als Rohr ausgebildeten und drehbar gelagerten Schaft sowie einen daran angeordneten Schneckensteg auf. Der Schneckensteg weist einen in etwa dreieckigen Querschnitt auf und ist aus einem vorderen und hinteren Schneckenstegteil gebildet. Der Schneckensteg ist weiters in seinem Inneren hohl ausgebildet und bildet einen Durchströmkanal aus, wobei die beiden Schneckenstegteile an ihrem dem Schaft zugewendeten Endabschnitt jeweils aufeinander zuragend ausgebildete Haltestege aufweisen. Zur Befestigung der beiden Schneckenstegteile sind helixförmige Befestigungsstege vorgesehen, welche aus einem Gussmaterial gebildet sind und mittels Schrauben am drehbaren Schaft befestigt sind. Die Befestigungsstege sind im Inneren des Schneckenstegs angeordnet und liegen auf den beiden Haltestegen auf.

Am Beginn des Schneckenstegs steht sein Durchströmkanal mit einem im Schaftinneren befindlichen Zufuhrkanal in Strömungsverbindung, wobei das Ende des Schneckenstegs mit einem ebenfalls im Schaftinneren befindlichen Abfuhrkanal in Strömungsverbindung steht.

Aus der JP 2010-105333 A ist ein Extruder mit einer darin angeordneten Extruderschnecke bekannt geworden. An der Extruderschnecke sind erste und zweite Schneckenstege in Axialrichtung voneinander beabstandet sowie jeweils abwechselnd angeordnet. In Axialrichtung ist zwischen dem ersten und dem zweiten Schneckensteg ein erster breiterer Aufnahmekanal ausgebildet. Zwischen dem zweiten Schneckensteg und dem ersten Schneckensteg ist ein dazu schmälerer zweiter Aufnahmekanal ausgebildet. Der erste Aufnahmekanal dient dazu, das zu erweichende Kunststoffmaterial im Bereich einer Zufuhrvorrichtung aufzunehmen und in Axialrichtung weiter zu fördern. Der zweite schmälere Aufnahmekanal dient zur Förderung und Aufnahme von Gasen, um diese aus dem Inneren des Extruders abführen zu können. Um im Bereich der Zufuhrvorrichtung die Aufnahme des zu erweichenden Kunststoffmaterials in dem zweiten schmäleren Aufnahmekanal zu verhindern, ist in diesem Axialabschnitt in dem zweiten Aufnahmekanal entweder ein eigener rohrförmiger Gegenstand aufgenommen oder ein den zweiten schmäleren Aufnahmekanal abdeckendes Abdeckelement angeordnet. Der rohrförmige Gegenstand bildet nur einen Einlegeteil, welcher zwischen den Schneckenstegen angeordnet ist und nicht vollständig innerhalb des metallischen Gusswerkstoffs zur Bildung des Schneckenstegs eingebettet ist. Außerhalb des Zufuhrbereichs der Zufuhrvorrichtung ist der zweite schmälere Aufnahmekanal offen ausgebildet.

Aus der DE 2 057 989 A1 ist eine innentemperierte Schnecke und ein Verfahren zur Herstellung derselben bekannt geworden. Die Schnecke weist einen um eine Längsachse drehbar angeordneten Basiskörper auf, an welchem zumindest abschnittsweise ein helixförmig bzw. wendelförmig ausgebildeter Schneckensteg angeordnet ist. Innerhalb des Schneckenstegs ist ein Strömungskanal zum Durchleiten eines Temperiermediums eingearbeitet, wobei nach dem Einarbeiten des Strömungskanals der zuvor im Schneckensteg ausgebildete Zugang zu diesem durch entsprechende Deckelemente nachträglich wieder zu verschließen ist. Bei dieser Schnecke sind sowohl innerhalb der Schneckenstege als auch im Bereich des Basiskörpers zwischen den Schneckenstegen bzw. Schneckenzähnen ausgebildeten Zahnlücke jeweils ein Strömungskanal vorgesehen. Nachteilig dabei ist der hohe Bearbeitungsaufwand zur Herstellung der Strömungskanäle innerhalb des Schneckenkörpers.

Aus der DE 100 13 474 A1 ist ein Temperiersystem für thermisch und mechanisch hoch beanspruchte Bauteile bzw. Maschinenelemente sowie ein Verfahren zu deren Herstellung bekannt geworden. Das Schneckenelement mit den wendelförmig ausgebildeten Schneckenstegen ist als Hohlkörper in seinem Inneren ausgebildet, wobei die innerhalb der Schneckenstege angeordneten Durchströmkanäle durch einen während der Herstellung mit eingegossenen Formkern gebildet werden, welcher nach der Herstellung des Schneckenelements zur Ausbildung der Kanäle wiederum zu entfernen ist. Auch hier ist ein hoher Herstellaufwand für die Ausbildung der Strömungskanäle erforderlich.

Die DE 1 751 961 A beschreibt einen weiteren Schneckenwärmetauscher mit hohl ausgebildeten Schneckengängen. Die hohl ausgebildeten Schneckengänge weisen einen wendelförmig ausgebildeten Längsverlauf auf und sind aus einem Hohlprofil gebildet. Die hohlen Schneckengänge bestehen aus einem im Umfang geschlossen ausgebildeten Hohlprofilstab, welcher direkt auf der sich drehenden Schneckenwelle aufgewunden und an dieser befestigt ist. Dabei bildet der gewundene Hohlprofilstab direkt sowohl das zum Weitertransport dienende Bauteil als auch in seinem Inneren den Kanal zum Durchleiten des Temperiermediums aus. Die Schneckenwelle kann ebenfalls hohl ausgebildet sein, wobei in diesem Fall eine eigene Zusowie Ableitung im Hohlraum der Schneckenwelle zur Zu- und Abfuhr des Temperiermediums zu und aus den hohlen Schneckengängen angeordnet sein können.

Die WO 2012/126574 A1 betrifft ebenfalls eine innentemperierbare Schnecke sowie ein Verfahren zu deren Herstellung. Die Schnecke umfasst einen um eine Längsachse drehbar angeordneten Basiskörper, an welchem ein helixförmig ausgebildeter Schneckensteg angeordnet ist. Die Strömungskanäle innerhalb der Schneckenstege werden von der Außenseite der Schneckenstege in diese eingearbeitet und anschließend der Kanal außenseitig bzw. randseitig am Schneckensteg wiederum durch ein eigenes Verschlusselement dicht verschlossen. Auch hier ist wiederum ein hoher Bearbeitungsaufwand für die Ausbildung der Strömungskanäle innerhalb der Schneckenstege erforderlich.

Aufgabe der vorliegenden Erfindung war es, die Nachteile des Standes der Technik zu überwinden und eine innentemperierbare Schnecke, eine damit ausgestattete Anlage und ein Verfahren zur Verfügung zu stellen, welche einfacher und kostgünstiger herzustellen ist und mittels derer ein Benutzer in der Lage ist, eine ausreichende Temperierung einfach vornehmen zu können.

Diese Aufgabe wird durch die Vorrichtung und ein Verfahren gemäß den Ansprüchen gelöst.

Die erfindungsgemäße ausgebildete innentemperierbare Schnecke für eine thermische Behandlung eines zu behandelnden Gutes umfasst einen um eine Längsachse drehbar angeordneten Basiskörper, an welchem Basiskörper zumindest abschnittsweise zumindest ein helixförmig ausgebildeter Schneckensteg angeordnet ist, wobei innerhalb des zumindest einen Schneckenstegs zumindest ein Durchströmkanal zum Durchleiten eines Temperiermediums angeordnet ist. Der zumindest eine Durchströmkanal ist ebenfalls helixförmig sowie einer Außenkontur des zumindest einen Schneckenstegs folgend ausgebildet, wobei der zumindest eine Durchströmkanal einerseits mit einem Zufuhrkanal und andererseits mit einem Abfuhrkanal in Strömungsverbindung steht, und dabei der zumindest eine Durchströmkanal durch zumindest einen eigenständigen Hohlprofilkörper gebildet ist, welcher zumindest eine Hohlprofilkörper den helixförmig ausgebildeten Längsverlauf aufweist und wobei der zumindest eine Hohlprofilkörper in das den Schneckensteg bildende Material eingebettet ist, wobei
- das Material des Schneckenstegs und des Basiskörpers durch einen metallischen Gusswerkstoff gebildet ist und der Basiskörper und der zumindest eine Schneckensteg einstückig aus dem metallischen Gusswerkstoff gebildet sind,
- der zumindest eine Hohlprofilkörper an einem Tragelement angeordnet und positioniert daran gehalten ist,
- der zumindest eine Hohlprofilkörper in radialer Richtung vom Tragelement distanziert angeordnet ist und mittels mehrerer Stützelemente am Tragelement abgestützt ist, und sich die insbesondere stabförmig ausgebildeten Stützelemente zwischen einer Außenfläche des Tragelements und einer dem Tragelement zugewendeten Innenfläche des Hohlprofilkörpers erstrecken, und wobei
- der zumindest eine Hohlprofilkörper vollständig innerhalb des Schneckenstegs eingebettet ist.

Der dadurch erzielte Vorteil liegt darin, dass so zumindest für die Bildung des Durchströmkanals innerhalb des Schneckenstegs ein unabhängiger, eigenständiger Baukörper ausgebildet werden kann, welcher bei der Herstellung der Schnecke, insbesondere deren Schneckensteg, in dem den Schneckensteg bildenden Material aufgenommen und darin eingebettet ist. Dadurch, dass der eigenständige Hohlprofilkörper bereits den Strömungskanal bildet, ist innerhalb des Schneckenstegs und dem diesen bildenden Material kein zusätzlicher Arbeitsaufwand für die Herstellung des Strömungskanals bzw. Durchströmkanals notwendig. Dadurch kann auch bereits noch vor dem Einbetten und Aufnehmen des Hohlprofilkörpers innerhalb des Werkstoffs des Schneckenstegs auch dessen vollständige Dichtheit sowie eine einwandfreie Durchströmung einfach kontrolliert werden. Durch das Aufnehmen und Einbetten des Hohlprofilkörpers innerhalb des Schneckenstegs kann so ein unterbrechungslos ausgebildeter Schneckensteg über seinen Querschnitt gesehen geschaffen werden, welcher keinerlei Fügestellen aufweist. Dadurch kann die Festigkeit zusätzlich erhöht und verbessert werden.

Wenn der zumindest eine Hohlprofilkörper an einem Tragelement angeordnet und positioniert daran gehalten ist, kann damit eine Baueinheit geschaffen werden, bei welcher der zumindest eine wendelförmige Hohlprofilkörper für den nachfolgenden Gießvorgang bereits positionsgenau mitsamt dem Tragelement in die Gussform eingelegt werden kann.

Ist der zumindest eine Hohlprofilkörper in radialer Richtung vom Tragelement distanziert angeordnet und mittels mehrerer Stützelemente am Tragelement abgestützt ist, kann damit ein vollständiges sicheres Einbetten des zumindest einen Hohlprofilkörpers innerhalb des auszubildenden Schneckensteges erzielt werden.

Ist das Material des Schneckenstegs durch einen insbesondere metallischen Gusswerkstoff gebildet, kann damit eine feste Ummantelung des Hohlprofilkörpers bei der Bildung des Schneckenstegs geschaffen werden. Weiters kann damit aber auch der Herstellvorgang zumindest des Schneckenstegs wesentlich vereinfacht werden, da der Hohlprofilkörper in seiner der Steigung sowie der Abmessung des Schneckenstegs entsprechenden Raumform ausgebildet sein kann und anschließend im Zuge des Herstellvorganges, insbesondere des Gussvorganges, vollständig darin eingebettet werden kann.

Sind der Basiskörper und der zumindest eine Schneckensteg einstückig aus dem insbesondere metallischen Gusswerkstoff gebildet, kann damit ein kompakter Baukörper bzw. Bauteil, welcher die Schnecke ausbildet, geschaffen werden.

Weiters kann es vorteilhaft sein, wenn der zumindest eine Hohlprofilkörper des zumindest einen Durchströmkanals durch ein Formrohr gebildet ist. Dadurch kann auf kostengünstige Standardbauteile zurückgegriffen werden, aus welchen der Durchströmkanal bzw. der Strömungskanal gebildet werden kann.

Eine andere Ausführungsform zeichnet sich dadurch aus, dass der Querschnitt des Formrohrs aus der Gruppe von dreieckig, rechteckig mehreckig, oval, elliptisch, rund ausgewählt ist. Damit kann eine gute Temperierung, insbesondere eine gute Wärmeübertragung ausgehend vom Hohlkörperprofil hin auf den Schneckensteg erzielt werden. Dies insbesondere dann, wenn die Flachseiten des Formrohrs nahe den Flanken des Schneckenstegs angeordnet werden.

Eine mögliche Weiterbildung sieht aus Gründen der Gewichtseinsparung vor, dass das Tragelement als Hohlprofilkörper, insbesondere als Rohr, ausgebildet ist.

Eine weitere bevorzugte Ausführungsform ist dadurch gekennzeichnet, dass der Zufuhrkanal und/oder der Abfuhrkanal ebenfalls durch einen eigenständigen Hohlprofilkörper gebildet ist und der den Zufuhrkanal bildende Hohlprofilkörper und/oder der den Abfuhrkanal bildende Hohlprofilkörper in das den Basiskörper bildende Material eingebettet ist. Damit kann auch eine sichere Zu- und Abfuhr des Temperiermediums hin zum Durchströmkanal und dessen Hohlprofilkörper geschaffen werden. Durch das Aufnehmen und Einbetten der Hohlprofilkörper des Zufuhrkanals und/oder des Abfuhrkanals kann so ebenfalls die Herstellung der Schnecke vereinfacht werden.

Weiters kann es vorteilhaft sein, wenn der Zufuhrkanal und/oder der Abfuhrkanal eine bezüglich der Längsachse des Basiskörpers parallel verlaufende Längserstreckung aufweist. Eine alternative Ausführungsform zeichnet sich dadurch aus, dass der Zufuhrkanal und/oder der Abfuhrkanal eine bezüglich der Längsachse des Basiskörpers dazu koaxiale Ausrichtung aufweist. Damit kann eine sichere Einbettung der Hohlprofilkörper zur Bildung des Zufuhrkanals und/oder des Abfuhrkanals erzielt werden. Durch die zentrische Ausrichtung der Hohlprofilkörper des Zufuhrkanals und/oder des Abfuhrkanals können so auch die Anschlüsse dazu einfacher und kostengünstiger gestaltet werden.

Eine weitere mögliche und gegebenenfalls alternative Ausführungsform hat die Merkmale, dass der den Zufuhrkanal bildende Hohlprofilkörper und/oder der den Abfuhrkanal bildende Hohlprofilkörper durch ein Formrohr mit einem insbesondere kreisrund ausgebildeten Querschnitt gebildet ist. Damit kann auch im Bereich des Zufuhrkanals und/oder des Abfuhrkanals um jene diese bildenden Hohlprofilkörper jeweils eine einfache Dichtungsanordnung in den jeweiligen Anschlussbereichen ausgebildet werden.

Eine weitere Ausbildung sieht vor, dass zwischen dem Zufuhrkanal und dem Durchströmkanal und/oder zwischen dem Durchströmkanal und dem Abfuhrkanal ein Übergangskanal angeordnet ist, welcher Übergangskanal ebenfalls durch einen eigenständigen Hohlprofilkörper gebildet ist und der Hohlprofilkörper des Übergangskanals in seinem Längsverlauf einen zueinander unterschiedlichen Querschnitt aufweist. Durch das Vorsehen von eigenen Hohlprofilkörpern zur Verbindung zwischen dem Zufuhrkanal und dem Durchströmkanal sowie zwischen dem Durchströmkanal und dem Abfuhrkanal kann so der innere Übergang einfacher ausgestaltet werden. Weiters kann durch den sich in seinem Längsverlauf ändernden Querschnitt eine einfache Strömungsverbindung zwischen den Hohlkörperprofilen mit zueinander unterschiedlichen Querschnitt geschaffen werden.

Eine andere Ausführungsform zeichnet sich dadurch aus, dass der Hohlprofilkörper des Übergangskanals in seinem dem Hohlprofilkörper des Durchströmkanals zugewendeten ersten Endbereich einen Querschnitt aufweist, welcher dem Querschnitt des Hohlprofilkörpers des Durchströmkanals entspricht und dass der Hohlprofilkörper des Übergangskanals in seinem dem Hohlprofilkörper des Zufuhrkanals oder dem Hohlprofilkörper des Abfuhrkanals zugewendeten weiteren Endbereich einen Querschnitt aufweist, welcher dem Querschnitt des Hohlprofilkörpers des Zufuhrkanals oder dem Querschnitt des Hohlprofilkörpers des Abfuhrkanals entspricht. Damit kann eine einfach herzustellende Verbindung zwischen den jeweils einander zugewendeten Endbereichen der Hohlprofilkörper geschaffen werden. Weiters wird damit die Möglichkeit geschaffen, Hohlprofilkörper mit zueinander unterschiedlich ausgebildeten Querschnitten miteinander strömungstechnisch zu verbinden.

Eine andere Ausführungsform zeichnet sich dadurch aus, dass der den Übergangskanal bildende Hohlprofilkörper in das den Basiskörper sowie den zumindest einen Schneckensteg bildende Material eingebettet ist. Damit kann eine kompakte und einfach herzustellende Baueinheit der Schnecke geschaffen werden.

Eine weitere Ausbildung sieht vor, dass die Schnecke in zumindest einem ihrer Übergangsbereiche zwischen deren zentralen Teil mit dem Schneckensteg und zumindest einem daran anschließenden Schneckenanschlussteil geteilt ausgebildet ist. Damit kann die Lagerung sowie die Zu- und Abfuhr des Temperiermediums besser und einfacher ausgebildet werden. Weiters kann so auch ein Baukastensystem geschaffen werden, bei welchem auf unterschiedliche Anwendungen rasch reagiert und ein einfacher Austausch des zentralen Schneckenteils erfolgen kann.

Eine weitere bevorzugte Ausführungsform ist dadurch gekennzeichnet, dass die die Kanäle bildenden Hohlprofilkörper stoffschlüssig miteinander verbunden sind. Damit kann nicht nur eine starre, feste Verbindung zwischen den einzelnen Hohlprofilkörpern geschaffen werden, sondern auch eine durchgängige, dichte Strömungsverbindung hergestellt werden.

Weiters kann es vorteilhaft sein, wenn das den Hohlprofilkörper bildende Material einen Wärmeausdehnungskoeffizienten aufweist, welcher in etwa einem Wärmeausdehnungskoeffizienten des zumindest den Schneckensteg bildenden Materials entspricht. Dadurch kann der Aufbau von inneren Spannungen zwischen den beiden die Schnecke bildenden Einzelkomponenten so gering wie möglich gehalten werden.

Eine andere Ausführungsform zeichnet sich dadurch aus, wenn der Hohlprofilkörper aus einem metallischen Werkstoff gebildet ist, welcher bezüglich des metallischen Gusswerkstoffs eine dazu höhere Schmelztemperatur aufweist.

Eine weitere Ausbildung sieht vor, dass innerhalb der Schnecke zumindest ein zusätzliches Temperierelement angeordnet ist.

Die Aufgabe der Erfindung kann auch durch eine Anlage, insbesondere einen pyrolytischen Reaktor oder einen Extruder, unter Verwendung zumindest einer erfindungsgemäß ausgebildeten innentemperierbaren Schnecke gelöst werden.

Die Anlage kann insbesondere durch einen pyrolytischen Reaktor oder einen Extruder gebildet sein, wobei diese ein sich in einer Längsrichtung erstreckendes Gehäuse aufweist, das einen Aufnahmeraum umfasst, wobei im Aufnahmeraum zumindest eine innentemperierbare Schnecke angeordnet ist, welche zu deren Temperierung von einem Temperiermedium durchströmbar ist.

So kann eine Anlage bereitgestellt werden, bei welcher eine kostengünstiger herzustellende Schnecke zum Einsatz kommt. Weiters kann dadurch auch ein störungsfreier Betrieb der gesamten Anlage durch die Verwendung der kompakt ausgebildeten Schnecke erzielt werden.

Die Aufgabe der Erfindung kann auch durch ein Verfahren zum Betreiben einer Anlage, insbesondere eines pyrolytischen Reaktors oder eines Extruders, unter Verwendung zumindest einer erfindungsgemäß ausgebildeten und innentemperierten Schnecke gelöst werden.

Dabei umfasst die Anlage ein sich in einer Längsrichtung erstreckendes Gehäuse mit einem Aufnahmeraum für ein zu behandelndes Gut, wobei die zumindest eine Schnecke im Aufnahmeraum drehbar angeordnet ist, um das zu behandelnde Gut in eine Förderrichtung zu fördern. Die zumindest eine Schnecke wird zu deren Temperierung von einem Temperiermedium durchströmt und dabei zumindest eine erfindungsgemäß ausgebildete innentemperierbare Schnecke verwendet wird.

Vorteilhaft ist dabei, dass so nicht nur eine einfachere und kostengünstigere Herstellung der Schnecke möglich ist, sondern auch noch durch den Einsatz von unterschiedlichen Temperiermedien die Möglichkeit geschaffen wird, eine ausreichende und vor allem hohe Wärmemenge an die Schnecke, insbesondere deren Schneckenstege übertragen zu können. Durch die hohe Wärmekapazität kann so eine ausreichende Temperierung der Schnecke, insbesondere deren Schneckengänge, für den durchzuführenden Behandlungsvorgang, insbesondere den Pyrolysevorgang, erzielt werden.

Eine weitere vorteilhafte Vorgehensweise ist dadurch gekennzeichnet, dass das Temperiermedium für dessen Durchleitung durch die Schnecke auf einen Temperaturwert bis zu 700°C erwärmt wird. So wird die Möglichkeit geschaffen für den jeweiligen Anwendungsfall die optimale Betriebstemperatur für den Betrieb der Anlage, insbesondere des Reaktors, bereitstellen zu können.

Schließlich zeichnet sich eine andere Vorgehensweise dadurch aus, wenn bei Beendigung des Betriebs der Anlage, insbesondere des pyrolytischen Reaktors oder des Extruders, das innerhalb der Schnecke befindliche Temperiermedium aus der Schnecke entfernt wird und damit jene innerhalb der Schnecke befindlichen Kanäle entleert werden. Damit kann ein Verstopfen der einzelnen Strömungskanäle innerhalb der Schnecke gesichert verhindert werden. Nach der Entleerung und dem Entfernen des Temperiermediums aus dem Inneren der Hohlprofilkörper kann auch noch zu deren Reinigung ein Spülmedium, insbesondere eine Spülflüssigkeit oder dergleichen, hindurchgeleitet werden, um so noch anhaftende Rückstände aus dem Innenraum der Hohlprofilkörper entfernen zu können. Damit können Anlagerungen und ein damit einhergehendes, mögliches Verstopfen der Strömungskanäle verhindert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine für die Innentemperierung ausgebildete Schnecke, in Ansicht;
- Fig. 2: einen Teilabschnitt der Schnecke nach Fig. 1 im Bereich eines Schneckenstegs, im Axialschnitt und vergrößerter Darstellung;
- Fig. 3: einen Teilabschnitt der Schnecke nach Fig. 1 im Bereich eines Schneckenstegs mit einer weiteren möglichen Ausbildung und Anordnung der Durchströmkanäle, im Axialschnitt und vergrößerter Darstellung;
- Fig. 4: einen Teilabschnitt eines Hohlprofilkörpers mit einem zusätzlich in dessen Zentrum angeordneten Tragelement, in Ansicht;
- Fig. 5: eine weitere mögliche Ausbildung einer Schnecke mit einer geteilten Ausbildung in deren Übergangsbereich, in Ansicht;
- Fig. 6: eine durch einen pyrolytischen Reaktor gebildete Anlage mit einer Schnecke, in Ansicht und stark schematisierter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

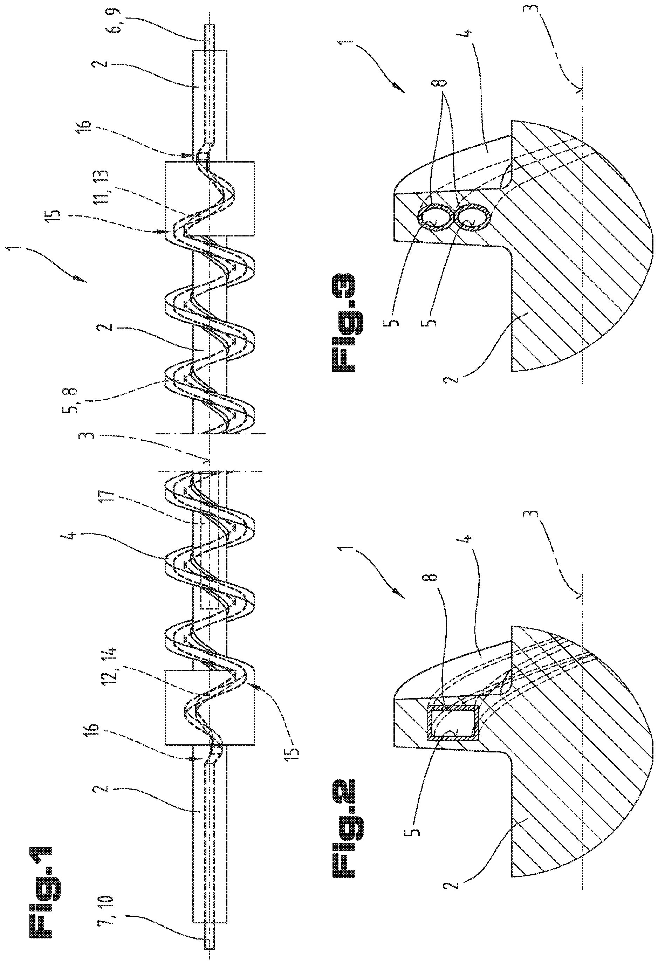

In den Fig. 1 und 2 ist einen innen temperierbare Schnecke 1 dargestellt, welche insbesondere als Pyrolyseschnecke oder aber auch als Extruderschnecke oder dergleichen Verwendung finden kann. Die Schnecke 1 weist einen Basiskörper 2 auf, welcher seinerseits eine Längsachse 3 definiert. Weiters ist noch dargestellt, dass am Basiskörper 2 zumindest abschnittsweise zumindest ein helixförmig oder wendelförmig ausgebildeter Schneckensteg 4 bzw. ein Schneckenwendel daran angeordnet ist. Dabei sei angemerkt, dass der Schneckensteg 4 in seinem umfänglichen Längsverlauf auch unterbrochen ausgebildet sein kann, jedoch die einzelnen hintereinander angeordneten Schneckenstegabschnitte bzw. Schneckenstegsegmente jeweils mit einer nachfolgend beschriebenen Innentemperierung versehen sind. Die einzelnen Schneckenstegabschnitte bzw. Schneckenstegsegmente können schaufel- oder paddelförmig ausgebildet sein.

Bevorzugt weist der Basiskörper 2 einen kreisrunden Querschnitt auf. Dieser kann weiters aus einem Vollmaterial gebildet sein und so den tragenden Körper der Schnecke 1 bilden. Der Basiskörper 2 ist gemeinsam mit dem zumindest einen helixförmig ausgebildeten Schneckensteg 4 um die Längsachse 3 drehbar. Durch den helixförmig bzw. wendelförmig ausgebildeten Schneckensteg 4 kann so die Schnecke 1 als Transportschnecke oder Fördermittel dienen, wie dies später noch beschrieben wird.

Zum Temperieren des zumindest einen Schneckenstegs 4 der Schnecke 1 ist innerhalb desselben zumindest ein Durchströmkanal 5 oder zumindest ein Strömungskanal zum Durchleiten eines hier nicht näher dargestellten fließfähigen Temperiermediums angeordnet bzw. vorgesehen. So ist der zumindest eine Durchströmkanal 5 in seinem Längsverlauf ebenfalls helixförmig ausgebildet und weist eine Raumform auf, welche einer Außenkontur des Schneckenstegs 4 folgend ausgebildet ist.

Um ein Durchleiten des Temperiermediums durch den Durchströmkanal 5 zu ermöglichen, steht der zumindest eine Durchströmkanal 5 einerseits mit einem Zufuhrkanal 6 und andererseits mit einem Abfuhrkanal 7 in Strömungsverbindung. Bei diesem Ausführungsbeispiel ist im rechten Bereich des Basiskörpers 2 der Zufuhrkanal 6 und im linken Bereich des Basiskörpers 2 der Abfuhrkanal 7 angeordnet. Diese Anordnung könnte aber auch gegengleich gewählt werden. Bei der zuvor beschriebenen Ausführungsform kann eine Durchströmrichtung des Temperiermediums ausgehend vom Zufuhrkanal 6, weiter durch den im Schneckensteg 4 angeordneten Durchströmkanal 5 hin zum Abfuhrkanal 7 festgelegt werden.

Es wäre aber noch unabhängig davon möglich, den Zufuhrkanal 6 als auch den Abfuhrkanal 7 an nur einem der Endbereiche der Schnecke 1 anzuordnen bzw. vorzusehen. Damit kann am anderen Endbereich der Schnecke 1 ausschließlich eine Lagerung ausgebildet werden und es ist nur im Bereich des Zufuhr- und Abfuhrkanals eine entsprechende Ausbildung der Versorgungsvorrichtung vorzusehen.

Auf die Darstellung von Versorgungs- und Aufbereitungseinrichtungen sowie Fördereinrichtungen zum Zuförderen und Abfördern des Temperiermediums wurde der besseren Übersichtlichkeit halber verzichtet.

Wie nun besser aus der Fig. 2 zu ersehen ist, ist der zumindest eine Durchströmkanal 5 durch einen eigenständigen Hohlprofilkörper 8 gebildet. Der zumindest eine Hohlprofilkörper 8 weist ebenfalls den helixförmig ausgebildeten Längsverlauf auf, um so vollständig innerhalb des ebenfalls helixförmig verlaufend ausgebildeten Schneckenstegs 4 angeordnet und aufgenommen werden zu können. Weiters ist aus der Fig. 2 noch zu ersehen, dass der Hohlprofilkörper 8 in das den Schneckensteg 4 bildende Material bzw. dessen Werkstoff eingebettet ist. Das Einbetten bzw. Aufnehmen im Schneckensteg 4 erfolgt im Querschnitt des Hohlprofilkörpers 8 gesehen bevorzugt voll umfänglich.

Im vorliegenden Ausführungsbeispiel ist der den zumindest einen Durchströmkanal 5 bildende zumindest eine Hohlprofilkörper 8 durch ein Formrohr gebildet. Beispielsweise kann das Formrohr einen rechteckig ausgebildeten Querschnitt aufweisen. Es wären aber auch davon abweichende Querschnittsformen möglich. So könnte z.B. der Querschnitt dreieckig, mehreckig, oval, elliptisch und/oder rund ausgebildet sein. Bei Querschnitten mit geradlinig ausgebildeten Seitenwänden können die Übergangsbereiche zwischen in Umfangsrichtung unmittelbar benachbarten Seitenwänden auch gerundet ausgebildet sein. Je nach Größe und Abmessung des Basiskörpers 2 sowie der Breite und Höhe des Schneckenstegs 4 in seinem Querschnitt, kann das Formrohr zum Beispiel bei einem rechteckigen Querschnitt eine Außenabmessung von 60 mm mal 40 mm bei einer Wandstärke von 3 mm aufweisen. Diese Abmessungen können an die Abmessungen des Schneckenstegs 4 angepasst werden. Abgerundete oder gerundet ausgebildete, insbesondere ovale oder elliptische, Querschnittsformen können gusstechnisch besser eingebettet werden.

Als Werkstoff zur Bildung des Hohlprofilkörpers 8 sowie der nachfolgend noch beschriebenen weiteren Hohlprofilkörper wird bevorzugt ein metallischer Werkstoff verwendet, wobei es aber auch möglich ist, z.B. den Hohlprofilkörper 8 sowie die nachfolgend noch beschriebenen weiteren Hohlprofilkörper auch aus einem Kunststoffmaterial oder dergleichen auszubilden. Bevorzugt wird ein metallischer Werkstoff gewählt, welcher bezüglich des metallischen Gusswerkstoffs eine dazu höhere Schmelztemperatur aufweist. Es ist auch noch darauf Bedacht zu nehmen, dass die Wärmedehnungseigenschaften der beiden Werkstoffe in etwa gleich sind, um so bei den zueinander stark unterschiedlichen Temperaturen zwischen dem "kalten" Ruhezustand und dem Betriebszustand mit der dazu höheren Betriebstemperatur den Aufbau von gegenseitigen inneren Spannungen so gering wie möglich zu halten.

Bei der Herstellung der Schnecke 1 kann der oder können die Hohlprofilkörper 8 vor dem Gießvorgang in ihrem Hohlraum jeweils mit einem bevorzugt rieselfähigen Gut, insbesondere einem Sand, befüllt werden. Dies dient einerseits dazu, den oder die Hohlprofilkörper 8 innerlich zu stützen und andererseits die Hohlprofilkörperwände zu kühlen und somit Wärme abzuführen.

Es könnten aber zusätzlich in dem Schneckensteg 4 mehrere in radialer Richtung übereinander angeordnete, insbesondere aneinander anliegende, Durchströmkanäle 5 im Schneckensteg 4 vorgesehen sein. Jeder einzelne Durchströmkanal 5 kann wiederum aus dem eigenständig ausgebildeten Hohlprofilkörper 8 gebildet sein. Dies ist vereinfacht in der Fig. 3 gezeigt.

Der den zumindest einen Durchströmkanal 5 bildende Hohlprofilkörper 8 kann beispielsweise durch einen Umformvorgang, insbesondere einen in der Metallbearbeitung bekannten Einrollvorgang, hergestellt werden. Damit kann so die Herstellung des helixförmig ausgebildeten Hohlprofilkörpers 8 im Zuge des Einrollvorgangs erleichtert und so einfach gestaltet werden. So können z.B. Faltenbildungen und/oder zu starke Dehnungen im äußeren Randbereich vermieden werden.

Bei der Wahl der Werkstoffe für den oder die Hohlprofilkörper 8 sowie des metallischen Gusswerkstoffs für den Schneckensteg 4 und gegebenenfalls den Basiskörper 2 soll darauf Bedacht genommen werden, dass beim Gießvorgang der Werkstoff des oder der Hohlprofilkörper 8 oberflächlich an schmilzt bzw. erweicht und so eine Anhaftung bzw. Anformung an den Gusskörper erfolgen kann.

Wie nun wieder besser aus der Fig. 1 zu ersehen ist, kann der Zufuhrkanal 6 und/oder auch der Abfuhrkanal 7 ebenfalls durch einen eigenständigen Hohlprofilkörper 9, 10 gebildet sein. Dabei weist bevorzugt der Zufuhrkanal 6 und/oder der Abfuhrkanal 7 eine bezüglich der Längsachse 3 des Basiskörpers 2 parallel verlaufende Längserstreckung auf. Günstig ist es weiters, wenn der Zufuhrkanal 6 und/oder der Abfuhrkanal 7 in einer koaxialen Ausrichtung bezüglich der Längsachse 3 des Basiskörpers 2 innerhalb diesem angeordnet oder ausgebildet ist. Weiters kann der den Zufuhrkanal 6 bildende Hohlprofilkörper 9 ebenfalls durch ein Formrohr gebildet sein. Weiters ist es auch möglich, dass der den Abfuhrkanal 7 bildende Hohlprofilkörper 10 ebenfalls durch ein Formrohr gebildet ist. So können beide Formrohre, welche den Hohlprofilkörper 9 und/oder 10 ausbilden, einen insbesondere kreisrund ausgebildeten Querschnitt aufweisen.

Weiters ist es noch möglich, dass in einem Anfangsbereich des Schneckenstegs 4 zwischen dem Zufuhrkanal 6 und dem Durchströmkanal 5 ein eigener Übergangskanal 11 angeordnet oder ausgebildet ist. Es ist aber auch in einem Endbereich des Schneckenstegs 4 möglich, dass zwischen dem Durchströmkanal 5 und dem Abfuhrkanal 7 ein weiterer Übergangskanal 12 angeordnet oder ausgebildet ist. Dabei kann jeder der Übergangskanäle 11, 12 ebenfalls durch einen eigenständigen Hohlprofilkörper 13 und/oder 14 gebildet sein.

Im Bereich der Übergangskanäle 11 und/oder 12 kann vor dem Beginn des Schneckenstegs 4 und/oder anschließend an das Ende des Schneckenstegs 4 jeweils ein in etwa zylinderförmig oder rohrförmig ausgebildeter, nicht näher bezeichneter Übergangskörper angeordnet oder ausgebildet sein. Innerhalb dem oder den Übergangskörpern ist jeweils der den Übergangskanal 11, 12 bildende Hohlprofilkörper 13 und/oder 14 aufgenommen bzw. angeordnet. Bevorzugt wird der zumindest eine Übergangskörper ebenfalls einstückig mit dem Basiskörper 2 sowie dem zumindest einen Schneckensteg 4 aus dem gleichen Werkstoff bzw. Material in einem Gussvorgang ausgebildet.

Da, wie zuvor beschrieben, der den zumindest einen Durchströmkanal 5 bildende Hohlprofilkörper 8 bei diesem Ausführungsbeispiel einen rechteckigen Querschnitt - Fig. 2 - oder einen ovalen bzw. elliptischen Querschnitt - Fig. 3 - aufweist und der den Zufuhrkanal 6 und/oder den Abfuhrkanal 7 bildende Hohlprofilkörper 9, 10 jeweils einen kreisrunden Querschnitt aufweisen, ist auch jeweils der den Übergangskanal 11 bildende Hohlprofilkörper 13 und/oder der den Übergangskanal 12 bildende, weitere Hohlprofilkörper 14 in seinem Längsverlauf mit einem zueinander unterschiedlichen Querschnitt auszubilden. Damit kann ein durchgängig ausgebildeter Strömungskanal gebildet werden, welcher aus den einzelnen Kanalabschnitten mit den jeweiligen Hohlprofilkörpern 8, 9, 10, 13, 14 zu einem gemeinsamen, eigenständigen Bauteil zusammengesetzt ist. Sind im Schneckensteg 4 mehrere Hohlprofilkörper 8 vorgesehen, ist ein entsprechender Übergang bzw. Sammelkanal zwischen den Hohlprofilkörpern 8 und dem Zufuhrkanal 6 und/oder dem Abfuhrkanal 7 anzuordnen oder auszubilden.

Der zwischen dem Zufuhrkanal 6 und dem Durchströmkanal 5 vorgesehene Übergangskanal 11 weist in seinem dem Hohlprofilkörper 8 des Durchströmkanals 5 zugewendeten ersten Endbereich 15 einen Querschnitt auf, welcher dem Querschnitt des Hohlprofilkörpers 8 des Durchströmkanals 5 entspricht. Gleiches gilt aber auch für den Hohlprofilkörper 14 des Übergangskanals 12, welcher zwischen dem Abfuhrkanal 7, insbesondere dessen Hohlprofilkörper 10, und dem Durchströmkanal 5 mit dessen Hohlprofilkörper 8 angeordnet ist.

Der Hohlprofilkörper 13 des Übergangskanals 11 weist in seinem dem Hohlprofilkörper 9 des Zufuhrkanals 6 zugewendeten weiteren Endbereich 16 einen Querschnitt auf, welcher dem Querschnitt des Hohlprofilkörpers 9 des Zufuhrkanals 6 entspricht. Es kann aber auch der Hohlprofilkörper 14 des Übergangskanals 12 in seinem dem Hohlprofilkörper 10 des Abfuhrkanals 7 zugewendeten, weiteren Endbereich 16 ebenfalls einen Querschnitt aufweisen, welche dem Querschnitt des Hohlprofilkörpers 10 des Abfuhrkanals 7 entspricht. Durch diese unterschiedlich ausgebildeten Querschnitte der Hohlprofilkörper 13, 14 der Übergangskanäle 11, 12 kann so der Übergang sowie die strömungstechnische Verbindung zwischen den zueinander einen unterschiedlichen Querschnitt aufweisenden Hohlprofilkörpern 8 und 9 sowie 8 und 10 geschaffen werden.

Je nach gewähltem Werkstoff der die einzelnen Kanäle 5, 6, 7, 11, 12 bildenden Hohlprofilkörper 8, 9, 10, 13, 14 können diese bevorzugt stoffschlüssig miteinander verbunden sein. So wäre es möglich, die einzelnen Kanalabschnitte, welche durch die Hohlprofilkörper 8, 9, 10, 13, 14 gebildet sind, jeweils aus Einzelteilen herzustellen und anschließend zu einem gemeinsamen, eigenständigen Bauteil miteinander zu verbinden. Es wäre aber auch möglich, die einzelnen Kanäle bzw. Kanalabschnitte aus einem einzigen, durchgängigen Hohlprofilkörper zu bilden und dabei die entsprechende Formgebung im Zuge des Herstellvorganges durchzuführen. Dies betrifft nicht nur den Längsverlauf des Hohlprofilkörpers, sondern auch dessen Querschnitt.

Die stoffschlüssige Verbindung kann beispielsweise durch Schweißen, Löten, Kleben oder einem ähnlichen Verbindungsvorgang erfolgen.

Wie bereits zuvor beschrieben, ist zumindest der den Durchströmkanal 5 bildende Hohlprofilkörper 8 in dem den Schneckensteg 4 bildenden Material eingebettet und somit darin aufgenommen. Dies kann beispielsweise dadurch erfolgen, dass zumindest das Material des Schneckenstegs 4 durch einen Gusswerkstoff, insbesondere einem metallischen Gusswerkstoff gebildet ist. Es wäre aber auch möglich, als Material zur Bildung des zumindest einen Schneckenstegs 4 ein Kunststoffmaterial zu wählen. Bevorzugt wird jedoch ein metallischer Gusswerkstoff verwendet, wobei hier Edelstahl und/oder rostfreie, hochwertige Stähle als Material bzw. Werkstoff eingesetzt werden können. Günstig ist es, wenn der Basiskörper 2 und der zumindest eine Schneckensteg 4 einstückig aus dem insbesondere metallischen Gusswerkstoff gebildet sind. Damit wird die Möglichkeit geschaffen, die einzelnen die Kanäle bildenden Hohlprofilkörper innerhalb der Gussform anzuordnen, diese zu schließen und anschließend den Werkstoff bzw. das Material zur Bildung des Basiskörpers 2 sowie zumindest des einen Schneckenstegs 4 einzubringen.

Unabhängig davon wäre es aber auch möglich, den Basiskörper 2 als eigenständige Welle herzustellen und zumindest den einen Schneckensteg 4 im Zuge des Herstellvorganges an den Basiskörper 2 anzuformen und gleichzeitig dabei den innerhalb des Schneckensteges 4 angeordneten Hohlprofilkörper 8 mit einzubetten.

Wird der Basiskörper 2 gemeinsam mit dem zumindest einen Schneckensteg 4 einstückig, beispielsweise in einem Gussvorgang oder einem Spritzgießvorgang, hergestellt, kann auch der den Zufuhrkanal 6 bildende Hohlprofilkörper 9 und/oder der den Abfuhrkanal 7 bildende Hohlprofilkörper 10 in das den Basiskörper 2 bildende Material mit eingebettet werden.

Sind auch noch die beiden Hohlprofilkörper 13 und/oder 14 zur Bildung der Übergangskanäle 11 und/oder 12 vorgesehen, können diese ebenfalls in das den Basiskörper 2 sowie den Schneckensteg 4 bildende Material bzw. den Werkstoff miteingebettet werden.

Es ist auch vorteilhaft, wenn die beiden Materialien bzw. Werkstoffe, welche einerseits den oder die Hohlprofilkörper 8, 9, 10, 13, 14 bilden und andererseits jenes, das den zumindest einen Schneckensteg 4 bildet, jeweils einen Wärmeausdehnungskoeffizienten aufweisen deren Werte in etwa gleich gewählt sind. Damit kann bei den zumeist hoch gewählten Einsatztemperaturen der Schnecke 1 ein gegenseitige Ablösen oder Zerstören von einzelnen Bauteilabschnitten verhindert werden.

Weiters wäre es aber auch noch möglich, dass innerhalb der Schnecke 1, insbesondere innerhalb des Basiskörpers 2 zumindest ein zusätzliches Temperierelement 17 angeordnet ist. Das zumindest eine Temperierelement 17 kann dazu dienen, beispielsweise auch noch den Basiskörper 2 auf einen zuvor bestimmten Temperaturwert zu temperieren. Das zusätzliche Temperierelement 17 könnte ebenfalls mit dem zuvor beschriebenen jedoch nicht näher bezeichneten Temperiermedium beaufschlagt werden. Es könnte aber auch ein mit elektrischer Energie betriebenes Temperierelement vorgesehen sein.

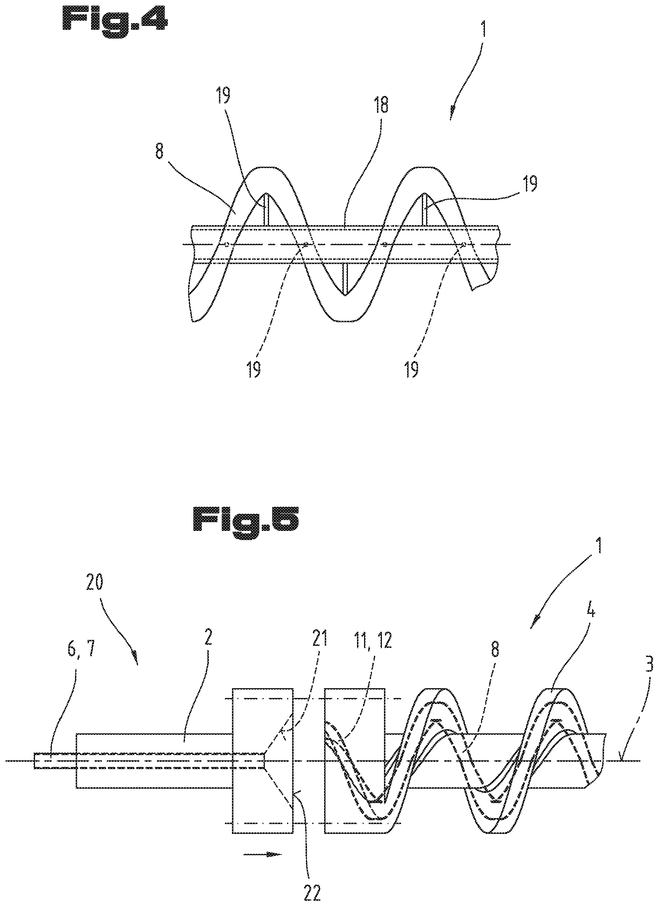

In der Fig. 4 ist noch vereinfacht gezeigt, dass der den Durchströmkanal 5 bildende zumindest eine Hohlprofilkörper 8 vor dem Einbetten in den Schneckensteg 4 zusätzlich noch auf oder an einem Tragelement 18 angeordnet und an diesem positioniert gehalten sein kann. Das Tragelement 18 kann aus Gründen der Gewichtseinsparung als Hohlprofilkörper, insbesondere als Rohr, ausgebildet sein. Diese Ausbildung kann mit allen anderen in dieser Beschreibung enthaltenen Ausführungen kombiniert werden.

Der oder die wendelförmigen Hohlprofilkörper 8 sind bevorzugt in radialer Richtung vom Tragelement 18 distanziert angeordnet und können mittels mehrerer Stützelemente 19 am Tragelement 18 abgestützt und so ortsfest an diesem gehalten werden. Die Stützelemente 19 können z.B. stabförmig ausgebildet sein und sich zwischen der Außenfläche des Tragelements 18 und dem Hohlprofilkörper 8, insbesondere dessen Innenfläche, welche dem Tragelement 18 zugewendet ist, erstrecken. Da zumeist ein metallischer Werkstoff verwendet wird, kann diese Befestigung bzw. Verbindung mittels Schweißverfahren erfolgen bzw. hergestellt werden.

In Abhängigkeit von der radialen Außenabmessung des herzustellenden Basiskörpers 2 sowie der radialen Höhe des darüber hinaus vorragenden Schneckenstegs 4 könnte der oder könnten die Hohlprofilkörper 8 auch direkt an der Außenfläche des Tragelements 18 angeordnet und daran befestigt werden.

Damit kann diese Baueinheit für den nachfolgenden Gießvorgang in die Gussform eingelegt und der Gusswerkstoff zur Bildung der kompletten Schnecke 1 eingebracht werden. Um eine zusätzliche Stabilisierung dieser Baueinheit und Wärmeabfuhr aus den einzelnen Hohlprofilen zu erzielen, können die Innenräume mit dem rieselfähigen Gut, insbesondere Sand, für den Gießvorgang befüllt werden.

In der Fig. 5 ist noch eine weitere mögliche Ausbildung der Schnecke 1 in einem ihrer Übergangsbereiche hin zum Zufuhrkanal 6 und/oder dem Abfuhrkanal 7 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen. Diese Darstellung zeigt den Übergangsbereich in noch voneinander distanzierter Anordnung der Schneckenbauteile.

Bei dieser Ausbildung kann die Schnecke 1 in zumindest einem ihrer Übergangsbereiche unterteilt bzw. geteilt ausgebildet sein. Die Teilungsebene verläuft bevorzugt in einer in senkrechter Richtung bezüglich der Längsachse 3 ausgerichteten Ebene. So kann jener Teilabschnitt der Schnecke 1, welcher den Schneckensteg 4 oder Schneckenstegteile davon aufweist, den zentralen Teil der Schnecke 1 bilden. Jener oder jene in Richtung der Längserstreckung daran anschließende Abschnitt oder daran anschließenden Abschnitte kann / können als Schneckenanschlussteil 20 bezeichnet werden. Im Schneckenanschlussteil 20 ist entweder der der Zufuhrkanal 6 oder der Abfuhrkanal 7 angeordnet, wie diese angedeutet ist.

Es wäre unabhängig davon auch noch möglich, in nur einem der Schneckenanschlussteile 20 sowohl den Zufuhrkanal 6 als auch den Abfuhrkanal 7 anzuordnen bzw. vorzusehen. Auf eine dichte Verbindung des Schneckenanschlussteils 20 oder der Schneckenanschlussteile 20 mit dem zentralen Teil der Schnecke 1 ist zu achten. Weiters ist es noch möglich, dass im Verbindungsbereich bzw. Kontaktbereich zwischen dem Schneckenanschlussteil 20 und dem zentralen Teil der Schnecke 1 in zumindest einem dieser Bauteile ein Sammelraum 21 angeordnet oder ausgebildet ist.

Bei dem hier vorliegenden Ausführungsbeispiel ist in dem links dargestellten Schneckenanschlussteil 20 an seinem dem zentralen Teil der Schnecke 1 zugewendeten Stirnseite 22 der Sammelraum 21 vorgesehen. Es wäre auch noch möglich, den Sammelraum 21 in dem dem Schneckenanschlussteil 20 zugewendeten zentralen Teil der Schnecke 1 oder auch an beiden der Bauteile vorzusehen. Der zumindest eine Sammelraum 21 dient dazu, mit einem der Übergangskanäle 11 und/oder 12 oder aber auch direkt mit dem Durchströmkanal 5 in Strömungsverbindung zu stehen. Damit kann das durch den Durchströmkanal 5 innerhalb des Schneckenstegs 4 währen des Betriebes hindurchgeleitete Temperiermedium aus dem zentralen Teil der Schnecke 1 in den Sammelraum 21 einströmen und aus diesem durch den Abfuhrkanal 7 abgeleitet werden.

Befindet sich der Schneckenanschlussteil 20 mit seinem darin aufgenommenen oder eingebetteten Zufuhrkanal 6 an dem in der Fig. 5 gezeigten, jedoch gegenüberliegenden Ende des zentralen Teils der Schnecke 1, strömt das Temperiermittel oder Temperiermedium zuerst durch den Zufuhrkanal 6 in den zumindest einen Sammelraum 21 und von diesem gegebenenfalls durch den ersten Übergangskanal oder gleich direkt in den mit dem Sammelraum 21 strömungsverbundenen Durchströmkanal 5.

Der Schneckenanschlussteil 20 ist zu seiner Verbindung mit dem zentralen Teil der Schnecke 1 gemäß eingetragenem Pfeil zu verlagern. Die gegenseitige Verbindung kann durch die aus dem Stand der Technik bekannten Verbindungsvorrichtungen bzw. Verbindungsverfahren erfolgen. Zumeist kann eine Flanschverbindung durch Verschraubung vorgesehen sein.

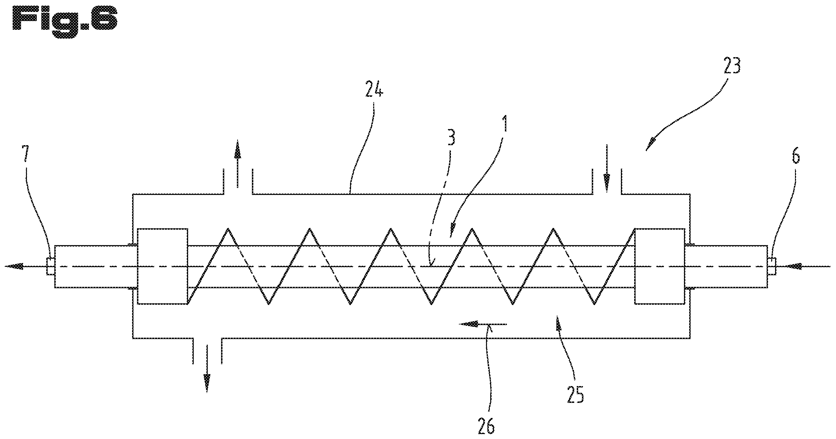

In der Fig. 6 ist eine mögliche und gegebenenfalls für sich eigenständige Ausführungsform einer Anlage, insbesondere eines pyrolytischen Reaktors 23 oder eines Extruders gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen. Die zuvor beschriebene Schnecke 1 könnte aber auch bei anderen Anlagen Verwendung finden, bei welchen ein thermisch zu behandelndes Gut einerseits von der Schnecke 1 weiter gefördert wird und andererseits das Gut von der Schnecke 1 entsprechend temperiert wird. So könnte auch eine Torrefizierung des Gutes durchgeführt werden. Dabei handelt es sich um einen Pyrolysevorgang mit einem geringeren Temperaturbereich von z.B. 250°C und 300°C.

Die hier stark schematisiert und vereinfacht dargestellte Anlage, welche durch einen pyrolythischen Reaktor 23 oder aber auch einen Extruder gebildet sein kann, weist ein sich in Richtung der Längsachse 3 der Schnecke 1 erstreckendes Gehäuse 24 mit einem Aufnahmeraum 25 auf. Das Gehäuse 24 weist ebenfalls eine Längserstreckung in Längsrichtung der Schnecke 1 auf. Im vorliegenden Ausführungsbeispiel dient der Aufnahmeraum 25 zur Aufnahme des zu behandelnden Gutes, insbesondere des zu pyrolysierenden Gutes, wobei die zumindest eine Schnecke 1 im Aufnahmeraum 25 drehbar angeordnet ist. Die Lagerung der Schnecke 1 Dabei kann bzw. wird das zu behandelnde, insbesondere zu pyrolysierende Gut von der Schnecke 1 in einer gemäß einem Pfeil eingetragenen Förderrichtung 26 bei entsprechender Drehung derselben weiter gefördert. Dies erfolgt von einem Zufuhrbereich, weiter durch den Aufnahmeraum 25 hin zu einem Ausgabebereich. Zusätzlich ist noch vorgesehen, dass die zumindest eine Schnecke 1 zu deren Temperierung im Bereich ihres zuvor beschriebenen Zufuhrkanals 6 bis hin zu ihrem Abfuhrkanal 7 von einem Temperiermedium durchströmt wird. Als Temperiermedium kann z.B. eine Salzschmelze oder andere Trägermedien für Wärme verwendet werden.

Die Salzschmelze kann in diesem Fall z.B. aus der Gruppe von Kaliumnitrat, Lithiumchlorid, Kaliumchlorid sowie aus einem Gemisch derselben ausgewählte sein. Auf die entsprechenden Aufbereitungs- und Versorgungsvorrichtungen der Schnecke 1 mit dem Temperiermedium wurde der besseren Übersichtlichkeit halber verzichtet. Als Temperiermedium könnte aber auch eine Polymerflüssigkeit, ein Flüssigmetall, ein erhitztes Gas oder dgl. Anwendung finden.

Je nach durchzuführender Behandlung des zu behandelnden, insbesondere zu pyrolysierenden, Gutes wird das Temperiermedium für dessen Hindurchleitung durch die Schnecke 1 auf einen Temperaturwert von bis zu 700°C erwärmt. Ein möglicher Temperaturbereich kann z.B. einen Temperaturwert aus einem Wertebereich aufweisen, dessen untere Grenze 200 °C und dessen obere Grenze 550 °C beträgt.

Ist der Behandlungsvorgang des zu behandelnden, insbesondere zu pyrolysierenden Gutes beendet und soll der Reaktor 23, insbesondere die erwärmte Schnecke 1, abgekühlt werden, ist vor Beendigung des Betriebs des Reaktors 23 und der zumeist damit einhergehenden Abkühlung das innerhalb der Schnecke 1 befindliche Temperiermedium aus der Schnecke 1 zu entfernen. Damit wird erreicht, dass jene innerhalb der Schnecke 1 befindlichen Kanäle entleert werden und so bei Erkalten des Temperiermediums dieses nicht zu dickflüssig wird oder sogar innerhalb der Schnecke 1 erstarrt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Schnecke
- 2: Basiskörper
- 3: Längsachse
- 4: Schneckensteg
- 5: Durchströmkanal
- 6: Zufuhrkanal
- 7: Abfuhrkanal
- 8: Hohlprofilkörper
- 9: Hohlprofilkörper
- 10: Hohlprofilkörper
- 11: Übergangskanal
- 12: Übergangskanal
- 13: Hohlprofilkörper
- 14: Hohlprofilkörper
- 15: erster Endbereich
- 16: weiterer Endbereich
- 17: Temperierelement
- 18: Tragelement
- 19: Stützelement
- 20: Schneckenanschlussteil
- 21: Sammelraum
- 22: Stirnseite
- 23: Reaktor
- 24: Gehäuse
- 25: Aufnahmeraum
- 26: Förderrichtung

## Patentansprüche

1. Innentemperierbare Schnecke (1) für eine thermische Behandlung eines zu behandelnden Gutes, insbesondere Pyrolyseschnecke oder Extruderschnecke, mit einem um eine Längsachse (3) drehbar angeordneten Basiskörper (2), an welchem Basiskörper (2) zumindest abschnittsweise zumindest ein helixförmig ausgebildeter Schneckensteg (4) angeordnet ist, wobei innerhalb des zumindest einen Schneckenstegs (4) zumindest ein Durchströmkanal (5) zum Durchleiten eines Temperiermediums angeordnet ist und der zumindest eine Durchströmkanal (5) ebenfalls helixförmig sowie einer Außenkontur des zumindest einen Schneckenstegs (4) folgend ausgebildet ist, wobei der zumindest eine Durchströmkanal (5) einerseits mit einem Zufuhrkanal (6) und andererseits mit einem Abfuhrkanal (7) in Strömungsverbindung steht, wobei der zumindest eine Durchströmkanal (5) durch zumindest einen eigenständigen Hohlprofilkörper (8) gebildet ist, welcher zumindest eine Hohlprofilkörper (8) den helixförmig ausgebildeten Längsverlauf aufweist und wobei der zumindest eine Hohlprofilkörper (8) in das den Schneckensteg (4) bildende Material eingebettet ist,
**dadurch gekennzeichnet,**
- **dass** das Material des Schneckenstegs (4) und des Basiskörpers (2) durch einen metallischen Gusswerkstoff gebildet ist und der Basiskörper (2) und der zumindest eine Schneckensteg (4) einstückig aus dem metallischen Gusswerkstoff gebildet sind,
- **dass** der zumindest eine Hohlprofilkörper (8) an einem Tragelement (18) angeordnet und positioniert daran gehalten ist,
- **dass** der zumindest eine Hohlprofilkörper (8) in radialer Richtung vom Tragelement (18) distanziert angeordnet ist und mittels mehrerer Stützelemente (19) am Tragelement (18) abgestützt ist, und sich die insbesondere stabförmig ausgebildeten Stützelemente (19) zwischen einer Außenfläche des Tragelements (18) und einer dem Tragelement (18) zugewendeten Innenfläche des Hohlprofilkörpers (8) erstrecken, und
- **dass** der zumindest eine Hohlprofilkörper (8) vollständig innerhalb des Schneckenstegs (4) eingebettet ist.

2. Schnecke (1) nach Anspruch 1, **dadurch gekennzeichnet, dass** der zumindest eine Hohlprofilkörper (8) des zumindest einen Durchströmkanals (5) durch ein Formrohr gebildet ist.

3. Schnecke (1) nach Anspruch 2, **dadurch gekennzeichnet, dass** der Querschnitt des Formrohrs aus der Gruppe von dreieckig, rechteckig, mehreckig, oval, elliptisch, rund ausgewählt ist.

4. Schnecke (1) nach einem der vorhergehenden Ansprüche, **dadurch gekennzeichnet, dass** das Tragelement (18) als Hohlprofilkörper, insbesondere als Rohr, ausgebildet ist.

5. Schnecke (1) nach einem der vorhergehenden Ansprüche, **dadurch gekennzeichnet, dass** der Zufuhrkanal (6) und/oder der Abfuhrkanal (7) ebenfalls durch einen eigenständigen Hohlprofilkörper (9, 10) gebildet ist und der den Zufuhrkanal (6) bildende Hohlprofilkörper (9) und/oder der den Abfuhrkanal (7) bildende Hohlprofilkörper (10) in das den Basiskörper (2) bildende Material eingebettet ist.

6. Schnecke (1) nach einem der vorhergehenden Ansprüche, **dadurch gekennzeichnet, dass** der Zufuhrkanal (6) und/oder der Abfuhrkanal (7) eine bezüglich der Längsachse (3) des Basiskörpers (2) parallel verlaufende Längserstreckung aufweist.

7. Schnecke (1) nach einem der vorhergehenden Ansprüche, **dadurch gekennzeichnet, dass** der Zufuhrkanal (6) und/oder der Abfuhrkanal (7) eine bezüglich der Längsachse (3) des Basiskörpers (2) dazu koaxiale Ausrichtung aufweist.

8. Schnecke (1) nach einem der vorhergehenden Ansprüche, **dadurch gekennzeichnet, dass** der den Zufuhrkanal (6) bildende Hohlprofilkörper (9) und/oder der den Abfuhrkanal (7) bildende Hohlprofilkörper (10) durch ein Formrohr mit einem insbesondere kreisrund ausgebildeten Querschnitt gebildet ist.

9. Schnecke (1) nach einem der vorhergehenden Ansprüche, **dadurch gekennzeichnet, dass** zwischen dem Zufuhrkanal (6) und dem Durchströmkanal (5) und/oder zwischen dem Durchströmkanal (5) und dem Abfuhrkanal (7) ein Übergangskanal (11, 12) angeordnet ist, welcher Übergangskanal (11, 12) ebenfalls durch einen eigenständigen Hohlprofilkörper (13, 14) gebildet ist und der Hohlprofilkörper (13, 14) des Übergangskanals (11, 12) in seinem Längsverlauf einen zueinander unterschiedlichen Querschnitt aufweist.

10. Schnecke (1) nach Anspruch 7, **dadurch gekennzeichnet, dass** der Hohlprofilkörper (13, 14) des Übergangskanals (11, 12) in seinem dem Hohlprofilkörper (8) des Durchströmkanals (5) zugewendeten ersten Endbereich (15) einen Querschnitt aufweist, welcher dem Querschnitt des Hohlprofilkörpers (8) des Durchströmkanals (5) entspricht und dass der Hohlprofilkörper (13, 14) des Übergangskanals (11, 12) in seinem dem Hohlprofilkörper (9) des Zufuhrkanals (6) oder dem Hohlprofilkörper (10) des Abfuhrkanals (7) zugewendeten weiteren Endbereich (16) einen Querschnitt aufweist, welcher dem Querschnitt des Hohlprofilkörpers (9) des Zufuhrkanals (6) oder dem Querschnitt des Hohlprofilkörpers (10) des Abfuhrkanals (7) entspricht.

11. Schnecke (1) nach Anspruch 7 oder 8, **dadurch gekennzeichnet, dass** der den Übergangskanal (11, 12) bildende Hohlprofilkörper (13, 14) in das den Basiskörper (2) sowie den zumindest einen Schneckensteg (4) bildende Material eingebettet ist.

12. Schnecke (1) nach einem der vorhergehenden Ansprüche, **dadurch gekennzeichnet, dass** diese in zumindest einem ihrer Übergangsbereiche zwischen deren zentralen Teil mit dem Schneckensteg (4) und einem Schneckenanschlussteil (20) geteilt ausgebildet ist.

13. Schnecke (1) nach einem der Ansprüche 1 bis 11, **dadurch gekennzeichnet, dass** die die Kanäle (5, 6, 7, 11, 12) bildenden Hohlprofilkörper (8, 9, 10, 13, 14) stoffschlüssig miteinander verbunden sind.

14. Schnecke (1) nach einem der vorhergehenden Ansprüche, **dadurch gekennzeichnet, dass** das den Hohlprofilkörper (8, 9, 10, 13, 14) bildende Material einen Wärmeausdehnungskoeffizienten aufweist, welcher in etwa einem Wärmeausdehnungskoeffizienten des zumindest den Schneckensteg (4) bildenden Materials entspricht.

15. Schnecke (1) nach einem der vorhergehenden Ansprüche, **dadurch gekennzeichnet, dass** der Hohlprofilkörper (8, 9, 10, 13, 14) aus einem metallischen Werkstoff gebildet ist, welcher bezüglich des metallischen Gusswerkstoffs eine dazu höhere Schmelztemperatur aufweist.

16. Schnecke (1) nach einem der vorhergehenden Ansprüche, **dadurch gekennzeichnet, dass** innerhalb dieser zumindest ein zusätzliches Temperierelement (17) angeordnet ist.

17. Anlage für eine thermische Behandlung eines zu behandelnden Gutes, insbesondere pyrolytischer Reaktor (23) oder Extruder, mit einem sich in einer Längsrichtung erstreckenden Gehäuse (24), das einen Aufnahmeraum (25) umfasst und mit zumindest einer im Aufnahmeraum (25) angeordneten innentemperierbaren Schnecke (1), welche zu deren Temperierung von einem Temperiermedium durchströmbar ist, **dadurch gekennzeichnet, dass** die zumindest eine Schnecke (1) nach einem der Ansprüche 1 bis 16 ausgebildet ist

18. Verfahren zum Betreiben einer Anlage, insbesondere eines pyrolytischen Reaktors (23) oder eines Extruders, , wobei die Anlage ein sich in einer Längsrichtung erstreckendes Gehäuse (24) mit einem Aufnahmeraum (25) für ein zu behandelndes Gut umfasst, und die zumindest eine Schnecke (1) im Aufnahmeraum (25) drehbar angeordnet ist, um das zu behandelndes Gut in eine Förderrichtung (26) zu fördern, wobei die zumindest eine Schnecke (1) zu deren Temperierung von einem Temperiermedium durchströmt wird,
**dadurch gekennzeichnet, dass**
zumindest eine innentemperierbare Schnecke (1) nach einem der Ansprüche 1 bis 16 verwendet wird.

19. Verfahren nach Anspruch 18 **dadurch gekennzeichnet, dass** das Temperiermedium für dessen Durchleitung durch die Schnecke (1) auf einen Temperaturwert bis zu 700°C erwärmt wird.

20. Verfahren nach einem der Ansprüche 18 oder 19, **dadurch gekennzeichnet, dass** bei Beendigung des Betriebs der Anlage das innerhalb der Schnecke (1) befindliche Temperiermedium aus der Schnecke (1) entfernt wird und damit jene innerhalb der Schnecke (1) befindlichen Kanäle entleert werden.

## Claims

1. An internally temperature-controllable screw (1) for thermally treating a good to be treated, in particular a pyrolysis screw or extruder screw, having a base body (2) arranged to be rotatable about a longitudinal axis (3), with at least one helically formed screw flight (4) being arranged at least sectionally on said base body (2), wherein at least one flow channel (5) for passing through a temperature-control medium is arranged within the at least one screw flight (4) and the at least one flow channel (5) is likewise formed helically and following an outer contour of the at least one screw flight (4), wherein the at least one flow channel (5) is fluidically connected on the one hand to a supply channel (6) and on the other hand to a discharge channel (7), wherein the at least one flow channel (5) is formed by at least one independent hollow profile body (8), said at least one hollow profile body (8) comprising the helically formed longitudinal extent and wherein the at least one hollow profile body (8) is embedded in the material forming the screw flight (4),
**characterized in that**
- the material of the screw flight (4) and of the base body (2) is formed by a metallic casting material and the base body (2) and the at least one screw flight (4) are formed as one piece from the metallic casting material,
- the at least one hollow profile body (8) is arranged on a carrier element (18) and held in position thereon,
- the at least one hollow profile body (8) is arranged spaced apart from the carrier element (18) in the radial direction and is supported on the carrier element (18) by means of several supporting elements (19), and the supporting elements (19), which are in particular rod-shaped, extend between an outer surface of the carrier element (18) and an inner surface of the hollow profile body (8) facing the carrier element (18), and
- the at least one hollow profile body (8) is entirely embedded within the screw flight (4).

2. The screw (1) according to claim 1, **characterized in that** the at least one hollow profile body (8) of the at least one flow channel (5) is formed by a forming tube.

3. The screw (1) according to claim 2, **characterized in that** the cross-section of the forming tube is selected from the group of triangular, rectangular, polygonal, oval, elliptic, round.

4. The screw (1) according to one of the preceding claims, **characterized in that** the carrier element (18) is formed as a hollow profile body, in particular as a tube.

5. The screw (1) according to one of the preceding claims, **characterized in that** the supply channel (6) and/or the discharge channel (7) is also formed by an individual hollow profile body (9, 10) and the hollow profile body (9) forming the supply channel (6) and/or the hollow profile body (10) forming the discharge channel (7) is embedded within the material forming the base body (2).

6. The screw (1) according to one of the preceding claims, **characterized in that** the supply channel (6) and/or the discharge channel (7) comprises a longitudinal extent extending in parallel to the longitudinal axis (3) of the base body (2).

7. The screw (1) according to one of the preceding claims, **characterized in that** the supply channel (6) and/or the discharge channel (7) comprises a coaxial orientation with respect to the longitudinal axis (3) of the base body (2).

8. The screw (1) according to one of the preceding claims, **characterized in that** the hollow profile body (9) forming the supply channel (6) and/or the hollow profile body (10) forming the discharge channel (7) is formed by a forming tube with a cross-section that is in particular formed circularly.

9. The screw (1) according to one of the preceding claims, **characterized in that** a transition channel (11, 12) is arranged between the supply channel (6) and the flow channel (5) and/or between the flow channel (5) and the discharge channel (7), said transition channel (11, 12) also being formed by an individual hollow profile body (13, 14) and the hollow profile body (13, 14) of the transition channel (11, 12) comprising a differing cross-section in its longitudinal extent.

10. The screw (1) according to claim 7, **characterized in that** the hollow profile body (13, 14) of the transition channel (11, 12) comprises a cross-section in its first end region (15) facing the hollow profile body (8) of the flow channel (5), said cross-section corresponding to the cross-section of the hollow profile body (8) of the flow channel (5) and that the hollow profile body (13, 14) of the transition channel (11, 12) comprises a cross-section in its further end region (16) facing the hollow profile body (9) of the supply channel (6) or the hollow profile body (10) of the discharge channel (7), said cross-section corresponding to the cross-section of the hollow profile body (9) of the supply channel (6) or to the cross-section of the hollow profile body (10) of the discharge channel (7).

11. The screw (1) according to claim 7 or 8, **characterized in that** hollow profile body (13, 14) forming the transition channel (11, 12) is embedded into the material forming the base body (2) as well as the at least one screw flight (4).

12. The screw (1) according to one of the preceding claims, **characterized in that** it is formed to be divided in at least one of its transition regions between its central part with the screw flight (4) and a screw connection part (20).

13. The screw (1) according to one of claims 1 to 11, **characterized in that** the hollow profile bodies (8, 9, 10, 13, 14) forming the channels (5, 6, 7, 11, 12) are connected to one another in a materially bonded manner.

14. The screw (1) according to one of the preceding claims, **characterized in that** the material forming the hollow profile body (8, 9, 10, 13, 14) has a coefficient of thermal expansion which approximately corresponds to a coefficient of thermal expansion of the material forming at least the screw flight (4).

15. The screw (1) according to one of the preceding claims, **characterized in that** the hollow profile body (8, 9, 10, 13, 14) is formed of a metallic material, which has a higher melting temperature as compared to the metallic casting material.

16. The screw (1) according to one of the preceding claims, **characterized in that** at least one additional temperature-control element (17) is arranged within it.

17. A plant for thermal treatment of a good to be treated, in particular a pyrolysis reactor (23) or an extruder, having a housing (24) which extends in a longitudinal direction and comprises a receiving chamber (25), and having at least one internally temperature-controllable screw (1) which is arranged in the receiving chamber (25) and through which a temperature-control medium can flow in order to control its temperature, **characterized in that** the at least one screw (1) is designed according to one of claims 1 to 16.

18. A method for operating a plant, in particular a pyrolysis reactor (23) or an extruder, wherein the plant comprises a housing (24) extending in a longitudinal direction with a receiving chamber (25) for a good to be treated, and the at least one screw (1) is arranged in the receiving chamber (25) so as to be rotatable, in order to convey the good to be treated in a conveying direction (26), wherein the at least one screw (1) is flown through by a temperature-control medium for controlling its temperature,
**characterized in that**
at least one internally temperature-controllable screw (1) according to one of claims 1 to 16 is used.

19. The method according to claim 18, **characterized in that** the temperature-control medium is heated to a temperature value of up to 700°C for its passage through the screw (1).

20. The method according to one of claims 18 or 19, **characterized in that** after termination of the operation of the plant the temperature-control medium located within the screw (1) is removed from the screw (1) and hence the channels located within the screw (1) are emptied.

## Revendications

1. Vis sans fin à température interne contrôlée (1) pour le traitement thermique d'un produit à traiter, plus particulièrement une vis sans fin de pyrolyse ou une vis sans fin d'extrudeuse, avec un corps de base (2) disposé de manière rotative autour d'un axe longitudinal (3), au moins une nervure de vis sans fin (4) de forme hélicoïdale étant disposée, au moins à certains endroits sur ce corps de base (2), moyennant quoi, à l'intérieur de l'au moins une nervure de vis sans fin (4), est disposé au moins un canal d'écoulement (5) pour le passage d'un fluide de contrôle de la température et l'au moins un canal d'écoulement (5) présente également une forme hélicoïdale et suit un contour externe de l'au moins une nervure de vis sans fin (4), l'au moins un canal d'écoulement (5) étant en liaison d'écoulement d'une part avec un canal d'alimentation (6) et d'autre part avec un canal d'évacuation (7), l'au moins un canal d'écoulement (5) étant constitué d'au moins un corps profilé creux (8) indépendant, cet au moins un corps profilé creux (8) présentant une extension longitudinale de forme hélicoïdale et l'au moins un corps profilé creux (8) étant intégré dans le matériau constituant la nervure de vis sans fin (4),
**caractérisée en ce que**
- le matériau de la nervure de vis sans fin (4) et du corps de base (2) est constitué d'un matériau métallique moulé et le corps de base (2) et l'au moins une nervure de vis sans fin (4) sont formés d'une seule pièce à partir du matériau métallique moulé,
- l'au moins un corps profilé creux (8) est disposé sur un élément porteur (18) et maintenu en position sur celui-ci,
- l'au moins un corps profilé creux (8) est disposé de manière distante dans la direction radiale de l'élément porteur et est appuyé, au moyen de plusieurs éléments d'appui (19), contre l'élément porteur (18) et les éléments d'appui (19), plus particulièrement en forme de tiges, s'étendent entre une surface externe de l'élément porteur (18) et une surface du corps profilé creux (8), orientée vers l'élément porteur (18) et
- l'au moins un corps profilé creux (8) est entièrement intégré à l'intérieur de la nervure de vis sans fin (4).

2. Vis sans fin (1) selon la revendication 1, **caractérisée en ce que** l'au moins un corps profilé creux (8) de l'au moins un canal d'écoulement (5) est constitué d'un tube moulé.

3. Vis sans fin (1) selon la revendication 2, **caractérisée en ce que** la section transversale du tube moulé présente une forme sélectionnée dans le groupe suivant : triangulaire, rectangulaire, polygonales, ovale, elliptique, ronde.

4. Vis sans fin (1) selon l'une des revendications précédentes, **caractérisée en ce que** l'élément porteur (18) est conçu comme un corps profilé creux, plus particulièrement comme un tube.

5. Vis sans fin (1) selon l'une des revendications précédentes, **caractérisée en ce que** le canal d'alimentation (6) et/ou le canal d'évacuation (7) est également constitué d'un corps profilé creux (9, 10) indépendant et le corps profilé creux (9) constituant le canal d'alimentation (6) et/ou le corps profilé creux (10) constituant le canal d'évacuation (7) étant intégré dans le matériau constituant le corps de base (2).

6. Vis sans fin (1) selon l'une des revendications précédentes, **caractérisée en ce que** le canal d'alimentation (6) et/ou le canal d'évacuation (7) présente une extension longitudinale parallèle à l'axe longitudinal (3) du corps de base (2).

7. Vis sans fin (1) selon l'une des revendications précédentes, **caractérisée en ce que** le canal d'alimentation (6) et/ou le canal d'évacuation (7) présente une orientation coaxiale par rapport à l'axe longitudinal (3) du corps de base (2).

8. Vis sans fin (1) selon l'une des revendications précédentes, **caractérisée en ce que** le corps profilé creux (9) constituant le canal d'alimentation (6) et/ou le corps profilé creux (10) constituant le canal d'évacuation (7) est constitué d'un tube moulé avec une section transversale plus particulièrement circulaire.

9. Vis sans fin (1) selon l'une des revendications précédentes, **caractérisée en ce que**, entre le canal d'alimentation (6) et le canal d'écoulement (5) et/ou entre le canal d'écoulement (5) et le canal d'évacuation (7), est disposé un canal de transition (11, 12), ce canal de transition (11, 12) étant également constitué d'un corps profilé creux (13, 14) indépendant et le corps profilé creux (13, 14) du canal de transition (11, 12) présentant, dans son extension longitudinale, des sections transversales différentes entre elles.

10. Vis sans fin (1) selon la revendication 7, **caractérisée en ce que** le corps profilé creux (13, 14) du canal de transition (11, 12) présente, dans sa première partie d'extrémité (15) orientée vers le corps profilé creux (8) du canal d'écoulement (5), une section transversale qui correspond à la section transversale du corps profilé creux (8) du canal d'écoulement (5) et **en ce que** le corps profilé creux (13, 14) du canal de transition (11, 12) présente, dans son autre partie d'extrémité (16) orientée vers le corps profilé creux (9) du canal d'alimentation (6) ou vers le corps profilé creux (10) du canal d'évacuation (7), une section transversale qui correspond à la section transversale du corps profilé creux (9) du canal d'alimentation (6) ou à la section transversale du corps profilé creux (10) du canal d'évacuation (7).

11. Vis sans fin (1) selon la revendication 7 ou 8, **caractérisée en ce que** le corps profilé creux (13, 14) constituant le canal de transition (11, 12) est intégré dans le matériau constituant le corps de base (2) ainsi que l'au moins une nervure de vis sans fin (4).

12. Vis sans fin (1) selon l'une des revendications précédentes, **caractérisée en ce que** celle-ci est conçue, dans au moins une de ses parties de transition, de façon à être divisée entre une partie centrale avec la nervure de vis sans fin (4) et une partie de raccordement de la vis sans fin (20).

13. Vis sans fin (1) selon l'une des revendications 1 à 11, **caractérisée en ce que** les corps profilés creux (8, 9, 10, 13, 14) constituant les canaux (5, 6, 7, 11, 12) sont reliés entre eux par liaison de matière.

14. Vis sans fin (1) selon l'une des revendications précédentes, **caractérisée en ce que** le matériau constituant le corps profilé creux (8, 9, 10, 13, 14) présente un coefficient de dilatation thermique qui correspond approximativement à un coefficient de dilatation thermique du matériau constituant l'au moins une nervure de vis sans fin (4).

15. Vis sans fin (1) selon l'une des revendications précédentes, **caractérisée en ce que** le corps profilé creux (8, 9, 10, 13, 14) est constitué d'un matériau métallique qui présente, par rapport au matériau métallique moulé, une température de fusion plus élevée.

16. Vis sans fin (1) selon l'une des revendications précédentes, **caractérisée en ce que**, à l'intérieur de celle-ci, est disposé un élément de contrôle de température (17) supplémentaire.

17. Installation de traitement thermique d'un produit à traiter, plus particulièrement un réacteur pyrolytique (23) ou un extrudeuse, avec un boîtier (24) s'étendant dans la direction longitudinale, qui comprend un espace de logement (25) et avec au moins une vis sans fin (1) à température interne contrôlée disposée dans l'espace de logement (25), qui peut être traversée, pour le contrôle de sa température, par un fluide de contrôle de la température, **caractérisée en ce que** l'au moins une vis sans fin (1) est conçue selon l'une des revendications 1 à 16.

18. Procédé d'exploitation d'une installation, plus particulièrement d'un réacteur pyrolytique (23) ou d'un extrudeuse, l'installation comprenant un boîtier (24) s'étendant dans une direction longitudinale avec un espace de logement (25) pour un produit à traiter, et l'au moins une vis sans fin (1) étant disposé de manière rotative dans l'espace de logement (25) afin de convoyer le produit à traiter dans une direction de convoyage (26), l'au moins une vis sans fin (1) étant traversée, pour le contrôle de sa température, par un fluide de contrôle de la température,
**caractérisé en ce que**
au moins une vis sans fin (1) à température interne contrôlée selon l'une des revendications 1 à 16 est utilisée.

19. Procédé selon la revendication 18, **caractérisé en ce que** le fluide de contrôle de la température est chauffé, pour son passage à travers la vis sans fin (1), à une température jusqu'à 700 °C.

20. Procédé selon l'une des revendications 18 ou 19, **caractérisé en ce que**, à la fin de l'exploitation de l'installation, le fluide de contrôle de la température se trouvant à l'intérieur de la vis sans fin (1) est éliminé et les canaux se trouvant à l'intérieur de la vis sans fin (1) sont ainsi vidés.
